Europäisches Patentamt

(19) European Patent Office

Office européen des brevets

(11) Veröffentlichungsnummer: **0 255 946**
**B1**

(12) EUROPÄISCHE PATENTSCHRIFT

(45) Veröffentlichungstag der Patentschrift:
07.11.90

(21) Anmeldenummer: 87111313.0

(22) Anmeldetag: 05.08.87

(51) Int. Cl.⁵: **C04B 11/26,** C04B 11/02,
C01F 11/46

(54) Komprimate aus getrocknetem Rauchgasgips und Verfahren zur Herstellung derselben.

(30) Priorität: 08.08.86 DE 3626912

(43) Veröffentlichungstag der Anmeldung:
17.02.88 Patentblatt 88/7

(45) Bekanntmachung des Hinweises auf die Patenterteilung:
07.11.90 Patentblatt 90/45

(84) Benannte Vertragsstaaten:
AT BE DE FR GB IT NL SE

(56) Entgegenhaltungen:
EP-A- 0 108 249
DE-A- 3 201 853
DE-A- 3 331 493
DE-A- 3 501 238

ZEMENT-KALK-GIPS, Nr. 11, Nov. 1983, Wiesbaden H.
WEILER et al. "Aufbereitung von feuchten feinteiligen
Rauchgasgipsen", Seiten 608-614.

(73) Patentinhaber: Gebr. Knauf Westdeutsche Gipswerke
KG, Postfach 10, D-8715 Iphofen(DE)

(72) Erfinder: Hüller, Rolf, Dr. Dipl.-Chem.,
Raiffeisenstrasse 5, D-8712 Volkach(DE)
Erfinder: Wirsching, Franz, Dr. Dipl.-Chem., In den
Weinbergen 7, D-8715 Iphofen(DE)

(74) Vertreter: Werner, Hans-Karsten, Dr. et al,
Deichmannhaus am Hauptbahnhof, D-5000 Köln 1(DE)

**Beschreibung**

Gegenstand der vorliegenden Erfindung sind Komprimate aus getrocknetem Rauchgasgips sowie Verfahren zur Herstellung derselben aus getrocknetem Rauchgasgips durch Komprimieren in Walzen- oder Brikettierpressen.

Aus DE-OS 26 58 915 ist ein Verfahren bekannt zur Herstellung von stückigem Calciumsulfat aus feinteiligem, natürlichem oder synthetischem Calciumsulfat in Gegenwart von Wasser, bei dem das feinteilige Calciumsulfat ohne Bindemittel oder andere Zusätze auf ein Gehalt an freiem Wasser im Calciumsulfat auf einen Wert zwischen größer als 0 bis 4 Gew.-% gebracht und der Anpreßdruck der Walzen auf einen Wert zwischen 1 und 5 Mp/cm Walzenbreite eingestellt wird.

Aus der DE-OS 32 01 853 ist ein Verfahren zur Herstellung von geformten Stücken aus feinteiligem Rauchgasgips durch Kompaktieren mittels Walzenpressen bekannt, bei dem der Rauchgasgips mit einem Gehalt an freiem Wasser von praktisch 0 Gew.-% einer Brikettierwalzenpresse zugeführt wird, in deren Walzenoberflächen spezielle geformte Vertiefungen angebracht sind, so daß auch mit einem spezifischen Anpreßdruck von 5 bis 10 Mp/cm Walzenbreite gearbeitet werden kann.

Diese Verfahren werden im technischen Maßstab in erheblichem Umfang eingesetzt und liefern Komprimate, die sowohl für die Zementindustrie als auch für die Gipsindustrie als Ausgangsmaterial für Baustoffe ausgezeichnet geeignet sind. Sie erfüllen alle Anforderungen an Festigkeit, Grünfestigkeit, Abriebbeständigkeit und Beständigkeit gegen Feuchtigkeit und Wasser. Da der meiste Rauchgasgips jedoch im Winter anfällt, während die größten Zementmengen im Sommer benötigt werden und auch die Gipsindustrie größere Mengen in den Sommermonaten benötigt, müssen die Komprimate aus Calciumsulfat-Dihydrat längere Zeit zwischengelagert werden. Dabei hat sich gezeigt, daß einige Rauchgasgips-Qualitäten Komprimate liefern, die zunächst einmal alle Anforderungen erfüllen, jedoch bei längerem direkten Kontakt mit flüssigem Wasser weich werden oder sogar zerfallen. Derartige Komprimate mussen daher so zwischengelagert werden, daß sie vor größeren Wassermengen geschützt sind.

Vergleichende Untersuchungen von Komprimaten aus verschiedenen Rauchgasgipsen haben gezeigt, daß die geringe Beständigkeit gegen Wasser vor allem beobachtet wird bei Rauchgasgipsen mit relativ hohem Chloridgehalt. Offenbar sind aber auch noch andere Einflüsse für die geringere Wasserbeständigkeit vorhanden, da auch wasserbeständige Komprimate mit hohem Chloridgehalt beobachtet wurden und gegen Wasser unbeständige Komprimate mit sehr niedrigem Chloridgehalt. Es gibt Hinweise darauf, daß die Korngrößenverteilung und Kristallform des Rauchgasgipses Einfluß hat auf die Wasserbeständigkeit der Komprimate. Es gibt jedoch bisher noch keine eindeutige Erklärung für diese Beobachtungen.

Aus dem Forschungsbericht T 84-188 (1984) des Bundesministeriums für Forschung und Technologie ist bekannt, daß Rauchgasgipse verschiedener Rauchgasentschwefelungsverfahren verschiedene Zusammensetzungen aufweisen.

Sofern der Kristallwassergehalt unter 20,9% liegt, ist dies auf nicht kristallwasserhaltige sonstige Verunreinigungen, insbesondere Calciumsulfit zurückzuführen. Auch diese Rauchgasgipse enthalten jedoch keinen teilweise calcinierten Rauchgasgips, zumal sie zunächst einmal mit einem erheblichen Gehalt an Feuchtigkeit anfallen, nämlich meist 8 bis 12 Gew.-%.

Die DE-OS 3 501 238 beschreibt ein Verfahren zur Erhöhung der Lagerfähigkeit, Abriebbeständigkeit und Druckfestigkeit von Calciumsulfat-Dihydratbriketts durch Zugabe von Bindemitteln vor der Brikettierung. Als Bindemittel werden die bekannten hydraulisch abbindenden Baustoffe, insbesondere Zement oder Rauchgasgipsbaustoffe der Gipsphasen $\alpha$- und $\beta$-Halbhydrat sowie Anhydrit II verwendet. Es wird behauptet, daß diese Gemische aus Dihydrat und Bindemittel nach dem Brikettier- und Kompaktiervorgang in freier Atmosphäre oder unter technisch hergestellter relativer Luftfeuchtigkeit von > 70 gelagert, den Hydratationsprozeß des Bindemittels ermöglicht. Eine Nacharbeitung dieses Verfahrens hat ergeben, daß derartige Komprimate keine Wasserstabilität aufweisen. Die Druckfestigkeiten nach Wasserlagerung und auch im wiedergetrockneten Zustand nach Wasserlagerung ist völlig unzureichend.

Die Erfindung hat sich daher zunächst einmal die Aufgabe gestellt, auch solche Rauchgasgipse zu wasserbeständigen Komprimaten verarbeiten zu können, die nach den Verfahren gemäß DE-OS 2 658 915 und DE-OS 3 201 853 zwar genau wie alle übrigen Rauchgasgipse komprimierbar sind, jedoch keine ausreichende Wasserbeständigkeit aufweisen. Die Erfindung hat sich weiterhin die Aufgabe gestellt ein Verfahren zu entwickeln, welches kostenmäßig mit den Verfahren gemäß DE-OS 2 658 915 und DE-OS 3 201 853 vergleichbar ist und bei dem ebenfalls auf den Zusatz von Bindemitteln oder anderen Zusätzen verzichtet werden kann.

Diese Aufgabe kann überraschend einfach gelöst werden durch Komprimate aus getrocknetem Rauchgasgips mit einem Kristallwassergehalt bezogen auf reines Calciumsulfat-Dihydrat von 12 bis 20 Gew.-%, vorzugsweise 16 bis 18 Gew.-%, wobei 6 bis 60 Gew.-% vorzugsweise 20 bis 33 Gew.-% des Calciumsulfats als Halbhydrat vorliegt und kein freies Wasser enthalten ist, welche hergestellt sind durch Komprimieren in Walzen- oder Brikettierpressen aus einem Ausgangsmaterial mit diesem Kristallwassergehalt, welches mit Abgastemperaturen zwischen 120 und 150°C getrocknet wurde.

Dieses Ergebnis war völlig überraschend, da zunächst einmal nach dem Stand der Technik bekannt war, daß für die Herstellung der Komprimate ein Gehalt an freiem Wasser von 0 oder sogar größer als 0 bis 4 Gew.-% notwendig ist. Weiterhin war bekannt, daß gegen Abbinden stabilisiertes alpha-Halbhydrat mit einem Gehalt an freiem Wasser von mehr als 0 bis 4 Gew.-% komprimiert werden kann; vgl. Beispiele 1 und 2 der DE-OS 26 58 915. Es war jedoch weiterhin bekannt, daß zum $\beta$-Halbhydrat

kalzinierte Komprimate aus Rauchgasgips extrem empfindlich sind gegen Wasser. Zunächst einmal zerfallen diese Komprimate wieder in die feinteiligen Ausgangsteilchen und binden danach wieder zum Calciumsulfat-Dihydrat ab. Es war daher überhaupt nicht vorhersehbar, daß Gemische aus Calciumsulfat-Dihydrat und β-Halbhydrat ohne Zusatz von freiem Wasser überhaupt nach dem bekannten Verfahren komprimiert werden können und dabei dann auch noch Komprimate entstehen, die selbst dann gegen Wasser beständig sind, wenn sie aus einem Rauchgasgips hergestellt wurden, der beim Komprimieren nach dem bekannten Verfahren zwar gute Komprimate liefert, die jedoch bei längerem Kontakt mit Wasser weich werden oder zerfallen. Besonders überraschend war dies bei chloridhaltigen Rauchgasgipsen, von denen angenommen werden konnte, daß sie von Wasser relativ leicht angegriffen werden. Stattdessen wurde jetzt beobachtet, daß sowohl chloridhaltige als auch sonstige Rauchgasgipse unabhängig von ihrer Korngrößenverteilung und Kristallform problemlos zu Komprimaten verarbeitet werden können, die obendrein auch bei längerem Kontakt mit Wasser extrem stabil sind. Es wird sogar in vielen Fällen beobachtet, daß nach einer 24-stundigen Lagerung in Wasser und erneuter Trocknung die Druckpunktfestigkeit zunimmt.

Gegenstand der vorliegenden Erfindung sind somit zunächst einmal die Komprimate aus getrocknetem Rauchgasgips mit einem Kristallwassergehalt bezogen auf reines Calciumsulfat-Dihydrat von 12 bis 20 Gew.-%, vorzugsweise 16 bis 18 Gew.-%, wobei 6 bis 60 Gew.-% vorzugsweise 20 bis 33 Gew.-% des Calciumsulfats als Halbhydrat vorliegt und kein freies Wasser enthalten ist, welche hergestellt sind durch Komprimierem in Walzenoder Brikettierpressen aus einem Ausgangsmaterial mit diesem Kristallwassergehalt, welches mit Abgastemperaturen zwischen 120 und 150°C getrocknet wurde.

Vorzugsweise liegen diese Komprimate in Form abgerundeter Briketts vor, jedoch hat sich gezeigt, daß auch ohne weiteres mit glatten Walzen hergestellte Komprimate, nämlich sogenannte Schülpen, die überraschend gute Eigenschaften aufweisen.

Die Komprimate können chloridfrei sein, können jedoch aber auch Chloridgehalte zwischen 0,01 und 0,5 Gew.-% aufweisen, ohne ihre guten Eigenschaften zu verlieren.

Die Erfindung betrifft weiterhin das Verfahren zur Herstellung von Komprimaten aus getrocknetem Rauchgasgips durch Komprimieren in Walzen- oder Brikettierpressen, dadurch gekennzeichnet, daß ein Rauchgasgips eingesetzt wird mit einem Kristallwassergehalt bezogen auf reines Calciumsulfat-Dihydrat von 12 bis 20 Gew.-%, vorzugsweise 16 bis 18 Gew.-%, wobei 6 bis 60 Gew.-% vorzugsweise 20 bis 33 Gew.-% des Calciumsulfats als Halbhydrat vorliegt und kein freies Wasser enthalten ist und mit Abgastemperaturen zwischen 120 und 150°C getrocknet wurde.

Dieser Wassergehalt wird beispielsweise dadurch eingestellt, daß mit einem Gemisch aus Rauchgas und Heißluft aus der Luftvorwärmung (LUVO) verwendet wird. Reines Rauchgas mit Temperaturen zwischen 90 und 130°C reicht nicht aus, Rauchgasgips nicht nur von dein anhaftenden Wasser, sondern auch teilweise von seinem Kristallwasser zu befreien. Heißluft aus der Lufvorwärmung ist hingegen oftmals bereits so heiß, daß mehr Kristallwasser entfernt wird, als erfindungsgemäß gewünscht ist.

Es hat sich als notwendig erwiesen, mit Gas so zu trocknen, daß die Abgastemperaturen zwischen 120 und 150°C, vorzugsweise 135 bis 140°C liegen. Die Temperatur der zugeführten Heißgase kann zwischen 200 und 500°C variieren und hängt vor allem von der Durchsatzgeschwindigkeit des Trockners ab. Bei Abgastemperaturen zwischen 150 und 200°C entsteht bereits mehr als 60% β-Halbhydrat. Bei Abgastemperaturen zwischen 60 und 100°C entsteht meist völlig getrocknetes Dihydrat mit nur geringfügigen Anteilen an β-Halbhydrat. Bei dem Verfahren gemäß DE-OS 2 658 915 wird vorzugsweise nur mit Rauchgas getrocknet, wobei Abgastemperaturen zwischen 40 und 70°C beobachtet werden. Hierdurch entsteht ein Calciumsulfat-Dihydrat mit mehr als 0 bis 4 Gew.-% freiem Wasser.

Die Abgase der Trocknung können auch bei dem erfindungsgemäßen Verfahren bei Abtrennung des getrockneten Rauchgasgipses entweder der Brennluft oder vorzugsweise dem Rauchgas vor der Rauchgasentschwefelung zugeführt werden. Mitgerissene Staubteilchen des Rauchgasgipses wirken dabei in der Rauchgasentschwefelung als Kristallkeime. Im übrigen entsprechen die Abgastemperaturen beim erfindungsgemäßen Verfahren nahezu den Temperaturen des zu reinigenden Rauchgases, so daß durch die Zurückführung in den Rauchgasstrom vor der Rauchgasentschwefelung keine weiteren Probleme entstehen.

Bei dem erfindungsgemäßen Verfahren wird selbstverständlich zunächst einmal mehr Energie aufgewendet, um den feuchten Rauchgasgips auf einen Kristallwassergehalt bezogen auf reines Calciumsulfat-Dihydrat auf dem Bereich von 12 bis 20 Gew.-% zu senken. Es hat sich jedoch gezeigt, daß diese Energie in den erfindungsgemäßen Komprimaten gespeichert bleibt. Die bei der Trocknung zusätzlich aufgewendete Energie wird bei der späteren Weiterverarbeitung der Komprimate in der Zementindustrie oder in der Gipsindustrie wieder eingespart, da bereits ein Teil des Materials als Halbhydrat vorliegt.

Ein weiterer Vorteil der erfindungsgemäßen Komprimate und des Verfahrens zur Herstellung derselben besteht darin, daß überraschenderweise weniger Energie für das Verpressen notwendig ist als bei einem Calciumsulfat-Dihydrat mit einem freiem Wassergehalt von mehr als 0 bis 4 Gew.-%. Eine nachträgliche Erklärung dieser Beobachtung könnte sein, daß beim erfindungsgemäßen Verfahren die äußere Kristallform des eingesetzten Calciumsulfat-Dihydrats erhalten bleibt, jedoch die Kristalle poröser werden und eine größere und rauhere Oberfläche aufweisen. Dieses Material erhält dann beim Komprimieren ein dichteres Gefüge, welches den Zutritt von Wasser in das Innere verhindert. Auf alle Fälle wirkt das β-Halbhydrat in dem Gemisch mit dem Calciumsulfat-Dihydrat nicht als Bindemittel, sondern bleibt auch bei längerer Lagerung in Wasser im Inneren der Komprimate als solches erhalten. Auch äußerlich unterscheiden sich die erfindungsgemäßen Komprimate nicht von den bisher bekannten gemäß den DE-OSen 2 658 915 bzw. 3 201 853. Sowohl das Schüttgewicht lose als auch die Punktfestigkeit trocken und Dichte bleiben völlig vergleichbar. Verbessert wird hingegen die Punktfestigkeit naß nach 24 Stunden Wasserlagerung sowie wieder getrocknet nach 24 Stunden Wasserlagerung und anschließender Trocknung.

Die erfindungsgemäßen Komprimate können daher problemlos mehrere Monate unter freiem Himmel gelagert werden und danach wie die bisher bekannten Komprimate für die Zementindustrie oder die Gipsindustrie verwendet werden.

Ein weiterer Vorteil der erfindungsgemäßen Komprimate ist, daß sie diese guten Eigenschaften aufweisen unabhängig vom Gehalt an Chlorid, ihrer Korngrößenverteilung und der Kristallform sowie dem Reinheitsgrad des eingesetzten Calciumsulfat-Dihydrats. Das erfindungsgemäße Verfahren kann somit sehr breit angewendet werden und gewährleistet somit in zuverlässiger Weise die Stabilität der Komprimate bei Lagerung unter freiem Himmel. Es kann daher nicht nur bei problematischen Rauchgasgipsen, sondern auch bei allen anderen Rauchgasgipsen vorteilhaft eingesetzt werden. Weiterhin hat sich gezeigt, daß die Verfahrensbedingungen für das Komprimieren weniger kritisch sind als bei dem Komprimieren von Calciumsulfat-Dihydrat mit einem Gehalt an freiem Wasser. Es sollte daher auch beim erfindungsgemäßen Verfahren ein Anpreßdruck von mindestens einem Mp/cm Walzenbreite angewendet werden, jedoch können im erfindungsgemäßen Verfahren auch höhere Drucke als 5 Mp/cm Walzenbreite zur Anwendung kommen. So werden erfindungsgemäß auch bei Anpreßdrucken von 10 bis 12 Mp/cm Walzenbreite noch gute Ergebnisse gefunden, während bei so hohen Anpreßdrucken Calciumsulfat-Dihydrat mit einem Gehalt an freiem Wasser bereits zu unbefriedigenden Produkten führt.

Die Trocknung kann erfindungsgemäß in den üblichen direkt beheizten Schnelltrocknern und Stromtrocknern erfolgen. Prinzipiell sind aber auch indirekt beheizte Schaufeltrockner einsetzbar, die zwar bei niedrigeren Eingangstemperaturen, aber durchaus vergleichbaren Ausgangstemperaturen arbeiten. Zu ihrer Beheizung kommt insbesondere Dampf in Frage.

Einige typische Ausführungsformen der erfindungsgemäßen Komprimate sowie der Verfahren zur Herstellung derselben sind in den nachfolgenden Beispielen näher erläutert.

Beispiel 1

Frisch gewonnener Rauchgasgips mit einem Feuchtigkeitsgehalt von 12,7 Gew.-% und einem Kristallwassergehalt von 20,2%, einem Reinheitsgrad von 96,7% und einem Chloridgehalt von 0,143 Gew.-% wurde auf einem Trockner (Hazemag) getrocknet. Die Eingangstemperatur des Heißgases betrug 550 bis 630°C. Die Abgastemperatur 140 bis 145°C. Die Leistung des Trockners lag bei 1,8 t/h. Der getrocknete Rauchgasgips enthielt kein freies Wasser und einen Kristallwassergehalt von 15,8%. Dies entspricht einem Halbhydratanteil von 29%. Dieses Material wurde auf einer Presse (Typ Bepex) zu Zigarren verpreßt. Die Punktfestigkeit trocken betrug 725 N. Die Punktfestigkeit naß nach 24 Stunden Wasserlagerung 755 N. Die Punktfestigkeit getrocknet (24 Stunden Wasserlagerung) 1750 N. Die Dichte betrug 2,12 g/cm$^n$. Das Produkt war wasserstabil.

Zum Vergleich wurde derselbe Rauchgasgips getrocknet mit einer Heißgastemperatur von 390 bis 400°C und einer Abgastemperatur von 80 bis 86°C. Die Leistung lag ebenfalls bei 1,8 t/h. Der Kristallwassergehalt lag bei 19,8%, was bezogen auf den Dihydratanteil von 94,3% einem Halbhydratanteil von 2,4% entsprach. Hieraus gepreßte Zigarren hatten eine Punktfestigkeit trocken von 695 N. Die Punktfestigkeit naß nach 24 Stunden Lagerung im Wasser betrug nur noch 35 N. Die Punktfestigkeit getrocknet nach 24 Stunden Wasserlagerung betrug 40 N. Die Dichte der Briketts vor der Wasserlagerung betrug 2,15 g/cm$^3$. Es handelte sich somit um ausgesprochen wasserempfindliche Briketts aus einem diesbezüglich problematischen Rauchgasgips.

Durch weitere Variationen der Heißgastemperatur und der Abgastemperatur wurden die Grenzen der Wasserfestigkeit ermittelt. Es zeigte sich, daß bei Abgastemperaturen von 150 bis 200°C der Gehalt an β-Halbhydrat über 60% stieg und dabei Briketts erhalten wurden, die rasch mit Wasser reagierten und dabei zerfielen. Bei Abgastemperaturen im Bereich zwischen 60 und 100°C wurde trockener Rauchgasgips mit nur geringen Anteilen von β-Halbhydrat erhalten. Briketts hieraus zerfielen ebenfalls bei Lagerung in Wasser. Bei Abgastemperaturen zwischen 40 und 70°C erhielt man die bisher bekannten Briketts mit einem Gehalt an freiem Wasser von bis zu 4 Gew.-%. Auch diese Briketts zerfielen bei der Lagerung in Wasser innerhalb von 24 Stunden.

Beispiel 2

In analoger Weise wie in Beispiel 1 beschrieben wurden mehrere problematische, aber auch unproblematische Rauchgasgipse getrocknet und sowohl zu Zigarren wie zu Schülpen komprimiert. Bei unproblematischen Rauchgasgipsen erhielt man sowohl im Kristallwasserbereich von 12 bis 20 Gew.-% bezogen auf reines Calciumsulfat-Dihydrat als auch bei einem Gehalt von freiem Wasser von mehr als 0 bis 4 Gew.-% gegen Wasser stabile Briketts. Bei problematischen Rauchgasgipsen, insbesondere solchen mit höherem Chloridgehalt, erhielt man nur bei einer Trocknung bis zu einem Kristallwassergehalt von 12 bis 20 Gew.-% bezogen auf reines Calciumsulfat-Dihydrat stabile Komprimate. Optimale Ergebnisse wurden insbesondere bei den problematischen Gipsen gefunden, im Bereich zwischen 16 und 18 Gew.-% Kristallwasser.

Patentansprüche

1. Komprimate aus getrocknetem Rauchgasgips mit einem Kristallwassergehalt bezogen auf reines Calciumsulfat-Dihydrat von 12 bis 20 Gew.-%, vorzugsweise 16 bis 18 Gew.-%, wobei 6 bis 60 Gew.-% vorzugsweise 20 bis 33 Gew.-% des Calciumsulfats als Halbhydrat vorliegt und kein freies Wasser enthalten ist, welche hergestellt sind durch Komprimieren in Walzen- oder Brikettierpressen aus einem Ausgangsmaterial mit diesem Kristallwassergehalt, welches mit Abgastemperaturen zwischen 120 und 150°C getrocknet wurde.

2. Komprimate gemäß Anspruch 1, dadurch gekennzeichnet, daß sie die Form abgerundeter Briketts aufweisen.

3. Komprimate gemäß Anspruch 1 oder 2, dadurch gekennzeichnet, daß sie ein Gehalt an Chlorid zwischen 0,01 bis 0,5 Gew.-% aufweisen.

4. Verfahren zur Herstellung von Komprimaten aus getrocknetem Rauchgasgips durch Komprimieren in Walzen- oder Brikettierpressen, dadurch gekennzeichnet, daß ein Rauchgasgips eingesetzt wird mit einem Kristallwassergehalt bezogen auf reines Calciumsulfat-Dihydrat von 12 bis 20 Gew.-%, vorzugsweise 16 bis 18 Gew.-%, wobei 6 bis 60 Gew.-% vorzugsweise 20 bis 33 Gew.-% des Calciumsulfats als Halbhydrat vorliegt und kein freies Wasser enthalten ist und mit Abgastemperaturen zwischen 120 und 150°C getrocknet wurde.

5. Verfahren gemäß Anspruch 4, dadurch gekennzeichnet, daß der Wassergehalt des Rauchgasgipses eingestellt wird durch Trocknung mit einem Gemisch aus Rauchgas und Heißluft aus der Lufvorwärmung (LUVO).

6. Verfahren gemäß Anspruch 5, dadurch gekennzeichnet, daß die Abgase der Trocknung nach der Abtrennung des getrockneten Rauchgasgipses entweder der Brennluft oder dem Rauchgas vor der Rauchgasentschwefelung zugeführt werden.

7. Verfahren gemäß einem der Ansprüche 4 bis 6, dadurch gekennzeichnet, daß Rauchgasgips verwendet wird mit einem Gehalt an Chlorid von 0,01 bis 0,5 Gew.-%.

Claims

1. Compacts (compressed bodies) of dried flue gas gypsum having a crystal water content of from 12 to 20% by weight, and preferably from 16 to 18% by weight, based on pure calcium sulfate dihydrate, wherein from 6 to 60% by weight, and preferably from 20 to 33% by weight, of the calcium sulfate is present as hemihydrate, and no free water is contained, produced by compressing in roller presses or briquetting presses from a starting material having said crystal water content, which starting material has been dried at flue gas temperatures of between 120°C and 150°C.

2. The compacts according to claim 1, characterized in that they exhibit the shape of rounded briquets.

3. The compacts according to claim 1 or claim 2, characterized in that they have a chloride content of between 0.01 and 0.5% by weight.

4. A process for producing compacts from dried flue gas gypsum by compressing in roller presses or briquetting presses, characterized in that a flue gas gypsum is employed which has a crystal water content of from 12 to 20% by weight, and preferably from 16 to 18% by weight, based on pure calcium sulfate dihydrate, wherein from 6 to 60% by weight, and preferably from 20 to 33% by weight, of the calcium sulfate is present as hemihydrate, and no free water is contained, which starting material has been dried at flue gas temperatures of between 120°C and 150°C.

5. The process according to claim 4, characterized in that the water content of the flue gas gypsum is adjusted by drying using a mixture of flue gas and hot air from the air preheater (LUVO).

6. The process according to claim 5, characterized in that the vent gases of the drying step, after the removal of the dried flue gas gypsum, are supplied to the combustion air or to the flue gas prior to the flue gas desulfurization plant.

7. The process according to anyone of claims 4 to 6, characterized in that a flue gas gypsum is employed which has a chloride content of from 0.01 to 0.5% by weight.

Revendications

1. Agglomérés de sulfate de calcium de fumées séché d'une teneur en eau de cristallisation, rapportée au sulfate de calcium di-hydraté, de 12 à 20% en poids, de préférence de 16 à 18% en poids, 6 à 60% en poids, de préférence 20 à 33% en poids du sulfate de calcium étant présent sous forme semi-hydratée, et aucune eau libre n'étant contenue, qui sont fabriqués par compression dans des presses à rouleau ou des presses à briquettes, à partir d'une matière de départ présentant cette teneur en eau de cristallisation, qui a été séchée avec des températures de gaz sortant comprises entre 120 et 150°C.

2. Agglomérés selon la revendication 1, caractérisés en ce qu'ils présentent la forme de briquettes arrondies.

3. Agglomérés selon la revendication 1 ou 2, caractérisés en ce qu'ils présentent une teneur en chlorure comprise entre 0,01 et 0,5% en poids.

4. Procédé de fabrication d'agglomérés de sulfate de calcium de fumées séché, par compression dans des presses à rouleau ou à briquettes, caractérisé en ce qu'est introduit un sulfate de calcium de fumées d'une teneur en eau de cristallisation, rapportée au sulfate de calcium di-hydraté pur, de 12 à 20%, de préférence 16 à 18% en poids, 6 à 60% en poids, de préférence 20 à 33% en poids du sulfate de calcium étant présent sous forme semi-hydratée, et aucune eau libre n'étant contenue, et que ce sulfate a été séché avec des températures de gaz sortant comprises entre 120 et 150°C.

5. Procédé selon la revendication 4, caractérisé en ce que la teneur en eau du sulfate de calcium de fumée est réglée par séchage grâce à un mélange de fumée et d'air chaud provenant du préchauffage d'air (LUVO).

6. Procédé selon la revendication 5, caractérisé en ce que les gaz sortant du séchage, après la séparation du sulfate de calcium de fumées séché, sont envoyés soit dans l'air de combustion soit dans les fumées avant la désulfuration des fumées.

7. Procédé selon une des revendications 4 à 6, caractérisé en ce que le sulfate de calcium de fumées est utilisé avec une teneur en chlorure de 0,01 à 0,5% en poids.